Europäisches Patentamt

(19) European Patent Office

Office européen des brevets

(11) Publication number: **0 438 318 A1**

# (12) EUROPEAN PATENT APPLICATION

(21) Application number: **91300389.3**

(22) Date of filing: **18.01.91**

(51) Int. Cl.⁵: **B62D 35/00**

(30) Priority: **18.01.90 ZA 90899667**

(43) Date of publication of application:
**24.07.91 Bulletin 91/30**

(84) Designated Contracting States:
**AT BE CH DE DK ES FR GB GR IT LI LU NL SE**

(71) Applicant: **Laursen, Jorn**
**312 Murray Street Brooklyn**
**Pretoria Transvaal 0181 (ZA)**
Applicant: **Klomfass, Roy Desmond**
**14 Eastwood, Palliser Road**
**Eastleigh, Edenvale, Transvaal 1610 (ZA)**

(72) Inventor: **Laursen, Jorn**
**312 Murray Street Brooklyn**
**Pretoria Transvaal 0181 (ZA)**
Inventor: **Klomfass, Roy Desmond**
**14 Eastwood, Palliser Road**
**Eastleigh, Edenvale, Transvaal 1610 (ZA)**

(74) Representative: **Barlow, Roy James et al**
**J.A. KEMP & CO. 14, South Square, Gray's Inn**
**London WC1R 5LX (GB)**

(54) Vehicle air deflector.

㊲ An air deflector (1) for attachment to the frontal face of a vehicle, generally a load carrying body (7) thereof or a mobilised freight container is provided. The deflector is of a substantially rigid construction and is either hollow or at least has hollow regions (26) therein. An air inlet (16) is provided at the leading end (12) of the deflector, the air inlet being in communication with elongate outlets at the sides of the deflector adjacent the trailing end (13) thereof. The outlets are arranged to guide air entering the inlet over the sidewalls (14) of a vehicle in use. A similar outlet (19) may optionally be provided at the top (5) of the deflector for location adjacent the roof (6) of a vehicle.

EP 0 438 318 A1

# VEHICLE AIR DEFLECTOR

## FIELD OF THE INVENTION

THIS INVENTION relates to vehicle air deflectors of the general type which are well known and which are generally attached to the frontal face of the load carrying body of a transport vehicle, mobilised freight container, or of a caravan, for the purpose of streamlining the vehicle body. The object of this is to reduce drag and improve fuel consumption and performance of the vehicle.

## BACKGROUND TO THE INVENTION

Numerous different forms of air deflectors of the type mentioned above have been proposed, and are in common use. Many of these employ substantially rigid dome-shaped units for attachment to the upper region of the frontal face of a vehicle body. These air deflectors work to greater or lesser extents and, in fact, achieve an appreciable reduction in fuel consumption, as well as improved performance.

Another form of air deflector which has been employed in the past is that described in our South African Patent No. 86/7136 as well as in our later South African Patent Application No. 89/5520. In these cases the body of the air deflector is of flexible material and the body is adapted to be inflated by means of air entering through a central frontal aperture to the body.

It has now been found, however, that most attractive results can be obtained by employing a rigid type of air deflector body having an air inlet aperture in the forwardly directed region thereof.

## SUMMARY OF THE INVENTION

In accordance with this invention there is provided an air deflector comprising a substantially rigid, hollow body having a dome-shaped, operatively forwardly directed front wall having an air inlet aperture at the leading end thereof, and either having a rear wall to thereby form a substantially enclosed hollow body or, alternatively, being adapted to be closed at the rear by the frontal face of a vehicle body to which the deflector is attached, and an outlet arrangement extending along an appreciable portion of the height of the deflector at each side thereof and adapted to approximately align with the sidewalls of a vehicle to which the deflector is mounted, said outlet arrangement being adapted to direct air within the deflector roughly along the sidewalls of a vehicle in use.

Further features of the invention provide for the outlet arrangement to be at least one elongate slot extending up a substantial part of the height of the deflector ; for the deflector body to be made in two parts which are telescopically adjustable relative to each other to adjust the height of the body ; and for deflector fins to be associated with the outlet arrangements to direct air in substantially laminar flow over the sidewalls of a vehicle in use.

Still further features of the invention provide for there to be one or more similar outlet arrangements across the top of the deflector body adjacent the trailing end thereof ; and for substantially direct communication passages to be formed within the deflector body between the outlet arrangements and the air inlet aperture.

A still further feature of the invention provides that, in cases of application to a vehicle having a cab and load carrying semi-trailer body, for a downward extension to the deflector body to be provided with additional outlet arrangements substantially collinear with those of the deflector body itself.

It is to be understood that the term "hollow" as applied to the body, includes a body that is particularly filled, say with foamed material, whilst leaving communication between the air inlet aperture and the outlet arrangements.

In order that the invention may be more fully understood, one embodiment thereof will now be described with reference to the accompanying drawings.

## BRIEF DESCRIPTION OF THE DRAWINGS

In the drawings :-

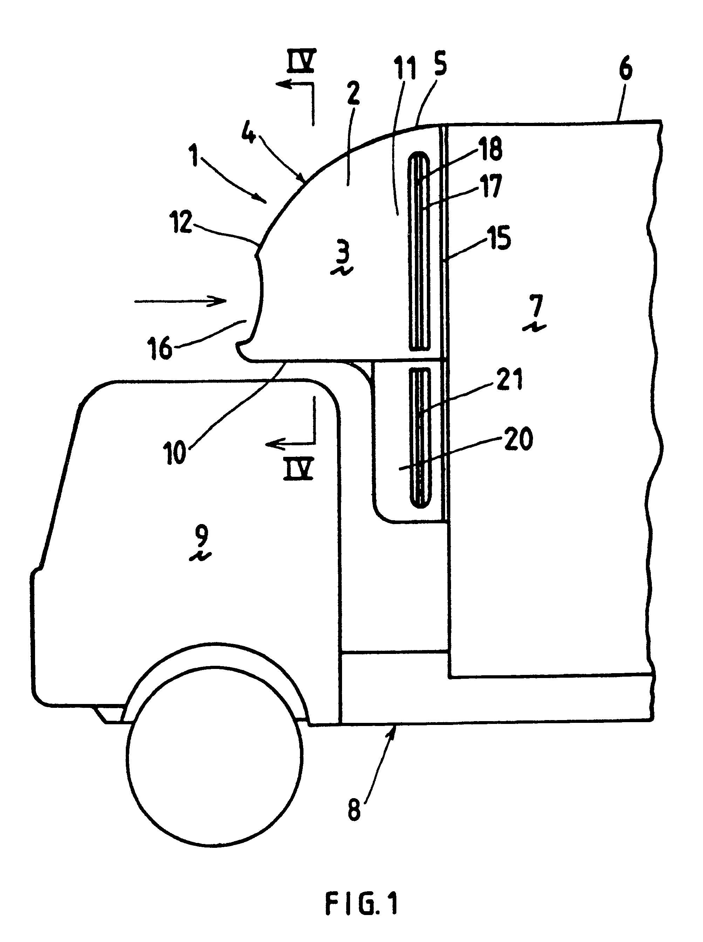

FIG. 1 is a schematic side elevation of a tractor and semi-trailer type of load carrying vehicle to which an air deflector according to this invention is attached ;

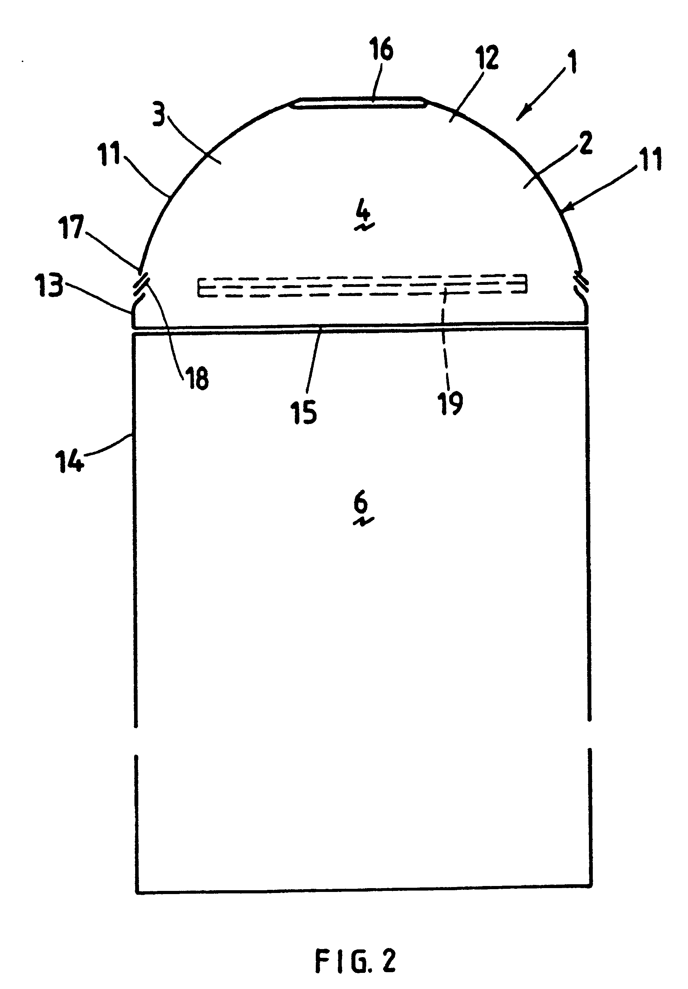

FIG. 2 is a schematic plan view thereof ;

FIG. 3 is a detailed cross-section through one form of outlet slot arrangement.

FIG. 4 illustrates a modification and represents a section taken along line IV to IV in Fig. 1 ;

FIG. 5 is a schematic sectional plan view of another embodiment of the invention ;

FIG. 6 is a cross-section of a communication passage taken along line VI - VI in Fig. 5 ; and,

FIG. 7 is a cross-section similar to that of Fig. 6 but taken along line VI to VI in Fig. 5.

## DETAILED DESCRIPTION WITH REFERENCE TO THE DRAWINGS

In the embodiment of the invention illustrated in Figure's 1 and 2 of the drawings, an air deflector, generally indicated by numeral 1 has a substantially rigid, hollow body 2.

The body 2 has a dome-shaped frontal wall 3 having a smoothly curved top wall 4 adapted, in the operative position, to substantially align at its upper rear edge 5 with the roof 6 of a substantially rectangular load carrying body 7 of a semi-trailer attached to a tractor 8 having a cab 9. The bottom wall 10 of the deflector is, in this case, substantially flat, and is adapted to project over the rear of the cab 9 in use. The sidewalls 11 of the deflector are also smoothly curved from the front 12 of the deflector. The rear portions 13 of the sidewalls are arranged to substantially align with the sidewalls 14 of the load carrying body 7.

In this embodiment of the invention the deflector is provided with a rear wall 15 to thereby form a totally enclosed hollow body other than the apertures and outlets mentioned below.

As provided by this invention, an air inlet 16 is provided at the leading end or front of the deflector and outlet slots 17 are provided in the sidewalls towards the rear thereof and in the region where the sidewalls substantially align with the sidewalls 14 of the load carrying body. The outlet slots extend up substantially the entire height of the deflector and may be provided with fins 18 arranged to ensure that air passing through the outlets is directed along the sidewalls in substantially laminar flow condition.

A similar outlet (indicated by dotted lines) 19, may be provided across the top of the deflector to direct air passing therethrough along the roof of the load carrying body.

In use the deflector functions substantially normally apart from the fact that air passes through the inlet 16 into the interior of the deflector and then through the outlets and onto the sidewalls of the vehicle in use. It has been found that this arrangement has an advantageous effect on the characteristics provided by the deflector.

Whilst it has not yet been proven, it is considered that at least a part of the advantageous effect of the deflector may result from the fact that air passing over the curved outside surface has an increased velocity relative to that passing through the deflector body. This may result in an aerofoil effect tending to pull the curved sidewall portions outwardly but with a forward component to such pull. The forward component would tend to pull the deflector, and thus the vehicle, forwardly thereby providing at least a small fuel saving.

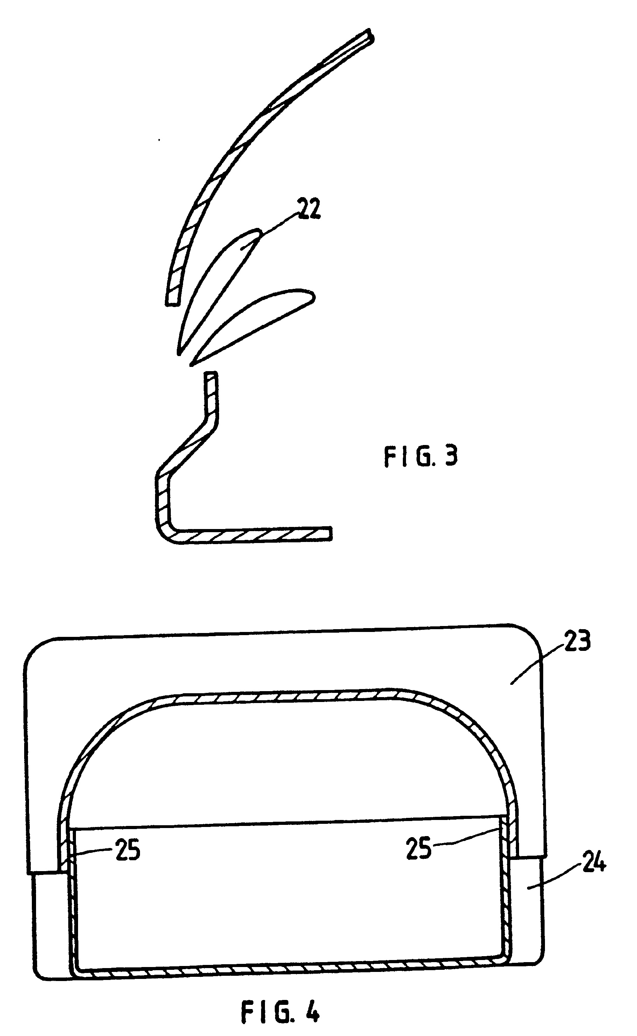

The fins 18, where they are present, may take the form of aerofoils as indicated by numeral 22 in Figure 3. This, it is considered, may enhance the aerofoil effect.

If required, an extension body 20 may be connected to the bottom wall 10 of the deflector to extend downwardly behind the cab and form an extension of the deflector body 2. The interior of the extension is in communication with that of the body 2 of the deflector so that air therein can pass downwardly, into the extension body, and outwardly through similar outlets 21 which are arranged substantially collinearly with the outlet slots 17 of the deflector itself. This provides additional outlet air to form a smooth flow over a greater part of the sidewalls of the vehicle body.

A further modification to the embodiment of the invention described above is to make the body itself in two parts 23 and 24 which are vertically telescopically adjustable relative to each other so as to be able to adjust the height of the deflector in order that it may suit different heights of vehicle bodies or cabs. In Fig. 4 the overlapping edges of the two portions, where this arrangement is used, are indicated by numeral 25. The body could additionally, be divided into transversely telescopically adjustable parts to provide for lateral adjustment of the size of the body. In this case the deflector body would be made of four parts.

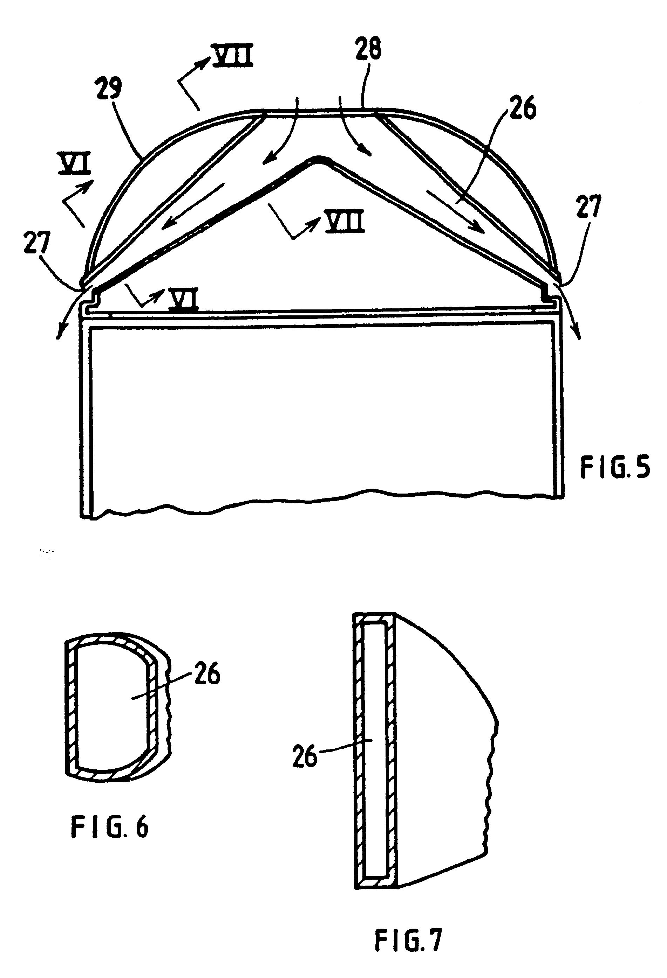

The aerofoil effect may also be enhanced by providing communication passages 26 connecting the outlets 27 and air inlet 28 as shown in figure's 5 to 7. The cross-sectional shape of such passages would change as illustrated by Figures 6 to 7. These passages define, with the curved sidewall 29 of the deflector, an aerofoil shape. This may further enhance the effect described above.

There may also be more than one inlet or the inlet could be divided into different parts with each part communicating with one or more specific outlets.

It will be understood that numerous variations may be made to the embodiment of the invention described above without departing from the scope hereof which is limited simply to the provision of the air inlet and outlet arrangements in combination with a rigid body air deflector.

## Claims

1. An air deflector (1) comprising a substantially rigid, hollow body (2) having a dome-shaped, operatively forwardly directed front wall (4) having an air inlet aperture (16, 28) at the leading end (12) thereof, and either having a rear wall (15) to thereby form a substantially enclosed hollow body or, alternatively, being adapted to be closed at the rear by the frontal face of a vehicle body (7) to which the deflector is attached, and an outlet arrangement (17, 27) extending along an appreciable portion of the height of the deflector at each side (13) thereof and adapted to approximately align with the sidewalls (14) of a vehicle to which the deflector is mounted, said outlet arrangement being adapted to direct air within the deflector roughly along the sidewalls of a vehicle in use.

2. An air deflector as claimed in claim 1 in which each outlet arrangement is at least one elongate slot (17, 27) extending up a substantial part of the height of the deflector.

3. An air deflector as claimed in either of claims 1 or 2 in which one or more additional outlets (19) are provided at the top (5) of the deflector for association with the roof (6) of a vehicle in use.

4. An air deflector as claimed in any one of claims 1 to 3 in which the outlet slots have fins (22) associated therewith for guiding outlet air, in substantially laminar air flow, over sidewalls of a vehicle in use.

5. An air deflector as claimed in claim 4 which the fins (22) are of aerofoil shape in cross-section.

6. An air deflector as claimed in any one of preceding claims in which the deflector is made in two vertically telescopically adjustable parts (23, 24), to provide an adjustable height of the deflector.

7. An air deflector as claimed in any one of the preceding claims in which communication passages (26) are provided from the outlet arrangements to the the air inlet.

8. An air deflector as claimed in any one of the preceding claims in which the passages define, together with the outer shape of the deflector, an aerofoil configuration in sectional plan view.

9. An air deflector as claimed in any one of the preceding claims in which the bottom (10) of the deflector is substantially flat.

10. An air deflector as claimed in any one of the preceding claims in which a downward extension (20) to the deflector body as provided with additional outlet arrangements (21) substantially collinear with those of the deflector body itself.

FIG.1

FIG. 2

FIG. 3

FIG. 4

FIG. 5

FIG. 6

FIG. 7

**European Patent Office**

## EUROPEAN SEARCH REPORT

Application Number

EP 91 30 0389

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4343506 (SALTZMAN)<br>* column 3, line 13 - column 4, line 36; figures 1, 3, 5 * | 1-3, 7 | B62D35/00 |
| X | US-A-4357045 (KINFORD)<br>* figures 1-6 * | 4, 7, 10 | |
| X | US-A-4006931 (GROVES)<br>* figures 1, 2 * | 5 | |
| A | US-A-3696732 (RODGERS) | | |
| | | | **TECHNICAL FIELDS SEARCHED (Int. Cl.5)** |
| | | | B62D |

The present search report has been drawn up for all claims

| Place of search | Date of completion of the search | Examiner |
|---|---|---|
| BERLIN | 16 APRIL 1991 | LUDWIG H.J. |